# EUROPEAN PATENT SPECIFICATION

(11) **EP 4 188 119 B1**
(45) Date of publication and mention of the grant of the patent: **04.11.2026**
(21) Application number: 21755835.2
(22) Date of filing: 02.08.2021
(51) Int. Cl.: A23L 33/105, A23L 19/00, A23L 33/22, A23L 33/125, A23L 33/185

(54) **AN OLIVE-DERIVED DRY POWDER AND PROCESS FOR ITS PREPARATION**
OLIVEN-TROCKENPULVER UND VERFAHREN ZU SEINER HERSTELLUNG
POUDRE SÈCHE DÉRIVÉE D'OLIVES ET PROCÉDÉ POUR SA PRÉPARATION

(30) Priority: 02.08.2020 IL 27642720
(43) Date of publication of application: 07.06.2023
(73) Proprietor: Shemen Shan Agricultural Cooperative Society Ltd., 1082000 Beit She'an (IL)
(72) Inventor: NOY, David, 1914800 Kibbutz Merav (IL); ZIPORI, Isaac, 8548900 Talmei Yossef (IL); LEIZER, Tal, 3093313 Zikhron Ya'akov (IL); MORENO HICK, Nicolas A., 6610909 Tel Aviv (IL)
(74) Representative: HGF
(86) International application number: PCT/IL2021/050935
(87) International publication number: WO 2022/029767

(56) References cited:
- EP-B1- 2 925 158
- WO-A1-2007/042742
- WO-A2-2004/110171
- JOSÉ S. TORRECILLA ET AL: "Improvement of fluidized-bed dryers for drying solid waste (olive pomace) in olive oil mills", EUROPEAN JOURNAL OF LIPID SCIENCE TECHNOLOGY, vol. 108, no. 11, 1 November 2006 (2006-11-01), DE, pages 913 - 924, XP055558152, ISSN: 1438-7697, DOI: 10.1002/ejlt.200600121
- PATR?CIA RAMOS ET AL: "Valorization of olive mill residues: Antioxidant and breast cancer antiproliferative activities of hydroxytyrosol-rich extracts derived from olive oil by-products", INDUSTRIAL CROPS AND PRODUCTS, vol. 46, 1 April 2013 (2013-04-01), NL, pages 359 - 368, XP055399110, ISSN: 0926-6690, DOI: 10.1016/j.indcrop.2013.02.020
- GOLDSMITH CHLOE D ET AL: "Ultrasound increases the aqueous extraction of phenolic compounds with high antioxidant activity from olive pomace", LWT- FOOD SCIENCE AND TECHNOLOGY, ACADEMIC PRESS, UNITED KINGDOM, vol. 89, 31 October 2017 (2017-10-31), pages 284 - 290, XP085313182, ISSN: 0023-6438, DOI: 10.1016/J.LWT.2017.10.065

## Description

### TECHNOLOGICAL FIELD

The present disclosure relates to products and processes making use of by-products generated during olive oil extraction.

### BACKGROUND ART

References considered to be relevant as background to the presently disclosed subject matter are listed below:
- Zipori I. et al., Potential nutritional value of olive-mill wastewater applied to irrigated olive (Olea europaea L.) orchard in a semi-arid environment over 5 years. Scientia Horticulturae 241 (2018) 218-224
- Spanish patent No. ES2401288
- International patent application publication No. WO18178492
- International patent application publication No. WO2004/110171
- International patent application publication No. WO2007/042742
- International patent application publication No. WO2010/086480
- US patent No. 10,479,958
- Lin Shaoling et. al., Sensory and nutritional properties of Chinese olive pomace based high fiber biscuit, Emir. J. Food & Agriculture, (2017) 29, 495-501
- Lammi S. et. al., Dry fractionation of olive pomace as a sustainable process to produce fillers for biocomposites, Powder Technology (2017), 326, 44-53
- Cioffi G. et. al., Phenolic compounds in olive oil and olive pomace from Cilento (Campania, Italy) and their antioxidant activity, Food Chemistry (2010) 121, 105-111
- International patent application publication No. WO2008082343
- International patent application publication No. WO2004110171
- A. Clemente et al., Chemical composition of extracted dried olive pomaces containing two and three phases", FOOD BIOTECHNOLOGY, vol. 11, no. 3, 1997, pages 273-291
- SPERONI CAROLINE SEFRIN et al, Micronization and granulometric fractionation improve polyphenol content and antioxidant capacity of olive pomace, INDUSTRIAL CROPS AND PRODUCTS, vol. 137, 2019, pages 347-355

Acknowledgement of the above references herein is not to be inferred as meaning that these are in any way relevant to the patentability of the presently disclosed subject matter.

### BACKGROUND

Olive oil is extracted from olives by processes that include crushing the olives and subjecting the formed olive paste to malaxation (mixing) and centrifugation processes using a two-phase decanter or a three-phase decanter, to obtain the olive oil. These processes result in generation of large quantities of various by-products, such as solid waste and liquid waste, most of which cannot be further used as commercial products and may lead to serious environmental problems if not properly treated. (Zipori I. et al., 2018).

Spanish patent No. ES2401288 describes methods for obtaining olive oil and at least one multifunctional ingredient from olives, comprising (a) obtaining olive pulp, (b) dehydrating the olive pulp to produce a dehydrated olive pulp, (c) grinding the dehydrated olive pulp to produce a dry dehydrated olive powder, and (d) obtaining olive oil and at least one multifunctional ingredient from dry dehydrated olive powder.

International patent application publication No. WO18/178492 describes a method for obtaining olive extracts and olive flour.

International patent application publication No. WO2004/110171 describes an olive powder for human consumption characterized by having particle size less than 0.65mm that is produced by a process in which olive paste, derived from whole olives, orujo or alpeorujo, is dried and is comminuted whilst cooling to a temperature below 10°C.

International patent application publication No. WO2007/042742 describes debittering and fermentation processes of olive cake obtained from olive fruit to enable both the resulting olive paste or powder to be used as a culinary ingredient and as a dietary supplement.

International patent application publication No. WO2010/086480 describes a process that stabilizes raw materials from olive, in particular, from stoned olive pomace and exhausted pomace and products from these processes.

US patent No. 10,479,958 describes the use of olive pomace to obtain derivative products which may be used as solid substrates, nutraceuticals, cosmetics or food supplements.

Lin S. et. al. describes sensory and nutritional properties of Chinese olive pomace based high fiber biscuit.

Lammi S. et. al., describes exploring the possibility of using dry fractionation (combination of grinding and sorting processes) to produce pulp-rich and stone-rich fractions with the highest purity and yield.

Cioffi G. et. al. studied the possible protective role played by Virgin olive oil secoiridoids on injurious effects of reactive oxygen metabolites on the intestinal epithelium, using Caco-2 human cell line.

International patent application publication No. WO2008082343 relates to a process for isolating soluble dietary fibers and valuable polyphenols from olive mill wastewater, wherein the olive mill wastewater is defatted by removing the fat by centrifugation and concentrated by removing the water content.

International patent application publication No. WO2004110171 describes olive powder having particle size less than 0.65mm being produced by a process in which olive paste, derived from whole olives, orujo or alpeorujo, is dried and is comminuted whilst cooling to a temperature below 10°C.

### GENERAL DESCRIPTION

The invention is defined by the appended claims.

The present disclosure provides, in accordance with a first of its aspects a food ingredient consisting of a dry olive pomace powder containing olive pomace dietary fibers, olive pomace polyphenols and fat, wherein said dry olive pomace powder has a total phenolic content (TPC) of less than 0.9% (w/w), olive dietary fibers content of at least 65% by weight out of the total weight of the powder and between about 2% to about 10% fat w/w.

The present disclosure also provides a method for preparing a food ingredient comprising dry olive pomace powder, the method consisting of:
(i) washing the olive pomace by mixing the olive pomace with an aqueous liquid at least once to obtain aqueous suspension of olive pomace;
(ii) subjecting the aqueous suspension of olive pomace to at least one separation step in which at least a portion of said water is removed from dry matter to obtain an olive pomace cake;
(iii) drying the olive pomace cake to obtain a dried olive pomace;
(iv) subjecting the dried olive pomace to at least one milling step to obtain a dry olive pomace powder; and
(v) optionally, collecting and sifting the dry olive pomace powder using a sifter having a desired mesh opening.

The present disclosure also provides a food product, which is not part of the invention, comprising a food ingredient comprising a dry olive pomace powder containing olive pomace dietary fibers and olive pomace polyphenols, wherein said ingredient has a TPC of less than 0.9% in the powder and olive dietary fibers content of at least 65% by weight out of the total weight of the powder.

### RIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

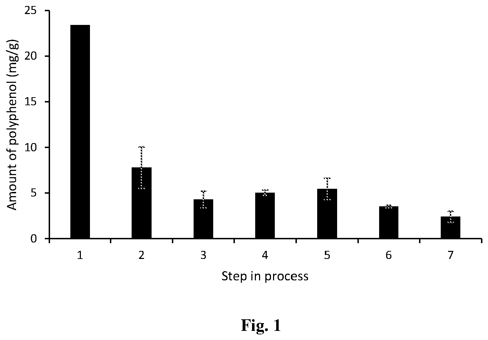

Fig. 1 is a bar graph showing the amount of polyphenol is various steps of a process.

### DETAILED DESCRIPTION OF EMBODIMENTS

The present disclosure is based on the preparation of a nutrient-rich edible olive pomace powder. Such nutrient-rich edible powder can be produced from by-products and specifically from olive pomace generated during olive oil extraction.

Olive pomace is a low-pH and bitter by-product that includes high amounts of polyphenols and hence is considered in the art as one having few commercial uses.

The olive pomace that is subjected to a two-phase process in a decanter is referred in the art as *alperujo* or wet-pomace, having a water content of about 70%, whereas olive pomace that is subjected to a three-phase process in a decanter is referred to in the art as *orujo* or dry pomace having a water content of about 50%-60%.

It has been found by the inventors that subjecting olive pomace, *alperujo* or *orujo,* or a suspension of the olive pomace in an aqueous solution, to at least one seperation step, for example a centrifugation step, such as one performed within a decanter to produce a pomace cake and drying and optionally grinding the dried cake, results in an edible product that includes high nutritional values of the olive (such as dietary fibers, proteins and minerals) while being void of the bitterness, possibly, due to a reduced amount of polyphenolic compounds. It was suggested by the inventors that this highly nutritional powder can be used as a food ingredient and can be combined into edible food products with beneficial nutritional values.

Thus, in accordance with a first aspect, the present disclosure provides a food ingredient consisting of a dry olive pomace powder containing olive pomace dietary fibers, olive pomace polyphenols and fat, wherein said dry olive pomace powder has a total phenolic content (TPC) of less than 0.9% (w/w), olive dietary fibers content of at least 65% by weight out of the total weight of the powder and between about 2% to about 10% fat w/w.

In accordance with yet another aspect, the present disclosure provides a method for preparing a food ingredient comprising dry olive pomace powder, the consisting of:
(i) washing the olive pomace by mixing the olive pomace with an aqueous liquid at least once to obtain aqueous suspension of olive pomace;
(ii) subjecting the aqueous suspension of olive pomace to at least one separation step in which at least a portion of said water is removed from dry matter to obtain an olive pomace cake;
(iii) drying the olive pomace cake to obtain a dried olive pomace;
(iv) subjecting the dried olive pomace to at least one milling step to obtain a dry olive pomace powder; and
(v) optionally, collecting and sifting the dry olive pomace powder using a sifter having a desired mesh opening.

The dry olive pomace powder is the food ingredient disclosed herein, namely, a dry powder containing olive pomace dietary fibers and olive pomace polyphenols, wherein said food ingredient has a TPC of less than 0.9% in the powder and olive dietary fibers content of at least 65% by weight out of the total weight of the powder.

In the following text, when referring to the dry olive pomace powder it is to be understood as also referring to the methods, food ingredient and food product disclosed herein. Thus, whenever providing a feature with reference to the dry powder, it is to be understood as defining the same feature with respect to the methods, food ingredient and food product, *mutatis mutandis.*

The olive pomace that can be used in accordance with the present disclosure is not limited to a specific olive variety and can be from all-natural subspecies of the olive trees (known as *Olea europaea)* including *Olea europaea* subsp, *O.e.* subsp. *cuspidata, O.e*.subsp. *Guanchica, O. e.* subsp. *Cerasiformis, O.e.* subsp. *Maroccana* and *O.e.* subsp. *Laperrinei.*

In some embodiments, the olive variety is *Olea europaea* subsp.

The olives may be green olives (i.e. picked before ripening) or black olives (i.e. picked while ripe).

As detailed herein, the dry olive pomace powder comprises olive pomace dietary fibers. In some embodiments, the olive pomace powder is rich in olive pomace dietary fibers.

In the context of the present disclosure, *olive pomace dietary fibers* refer to dietary or nutritional fibers that are identified in the art to be present in olive pomace.

The olive dietary fibers are present in an amount of at least 65% out of the total weight of the powder, at times in an amount of at least about 70%, at times at least about 72%, at times at least about 74%, at times at least about 76%, at times at least about 78%, at times at least about 80%, at times at least about 82%, at times at least about 85%, at times at least about 87%, at times at least about 90%, at times at least about 92%, at times at least about 95% by weight out of the total weight of the powder.

In some examples, the olive dietary fibers are present in the olive pomace powder in any amount within the range of between about 65% and about 95%, at times between about 70% and about 95%, at times between about 75% and about 95%, at times between about 75% and about 90%, at times between about 80% to about 90%, at times between 80% and 87%, at times between about 80% and about 85%by weight out of the total weight of the powder.

The olive dietary fibers are present in an amount of about 65% out of the total weight of the powder, at times in an amount of about 70%, at times at least about 72%, at times about 74%, at times about 76%, at times about 78%, at times about 79%, at times about 80%, at times about 81%, at times about 82%, at times a about 85%, at times about 86%, at times about 87%, at times about 88% at times about 90%, at times about 92%, at times about 95% by weight out of the total weight of the powder.

While the distribution of the olive dietary fibers may vary depending, *inter alia,* on the olive variety, culture conditions, season, origin of the olives or extraction process, the olive dietary fibers in accordance with some embodiments of the present disclosure comprise soluble fibers. In accordance with some embodiments, the olive dietary fibers comprise at least olive derived pectin polysaccharides.

In accordance with some examples the pectic polysaccharides comprise at least one of arabinan, a homogalacturonan and rhamnogalacturonan.

In accordance with some examples, the olive derived pectin polysaccharides are at least arabinan-rich pectic polysaccharides.

In some embodiments, the arabinan-rich pectin polysaccharides comprise an arabinose-rich arabinan.

In some embodiments, the arabinan-rich pectin polysaccharides comprise above 80% arabinose.

In some examples, the arabinan-rich pectin polysaccharides comprise L-arabinofuranose or L-arabinopyranose.

In some examples, the olive pomace dietary fibers comprise at least one homogalacturonan and rhamnogalacturonan.

In accordance with some examples, the olive derived pectin polysaccharides are at least galacturonan-rich pectic polysaccharides.

In some embodiments, the olive derived dietary fibers comprise at least one of olive derived celluloses, hemicellulose or lignin.

In some embodiments, the olive dietary fibers is or comprise hemicellulose.

In some embodiments, the hemicellulose is at least one of xylans, xyloglucans, glucuronoxylans or mannans.

In some embodiments, the hemicellulose is at least one of glucuronoxylans or xyloglucans.

In some embodiments, the hemicellulose is hemicellulose A. In some embodiments, hemicellulose A comprises β(1/4) linked xylose (Xyl) residues with branches of 4-O-methylglucuronic acid groups on the O-2 atoms of the main chain.

In some embodiments, the hemicellulose is hemicellulose B.

In some embodiments, the olive dietary fiber is or comprises cellulose.

In some embodiments, the olive dietary fiber is or comprises lignin.

The dry olive pomace powder also includes olive derived polyphenols. The term *polyphenols* (polyhydroxyphenols or phenolic compounds) refer to a class of natural, synthetic or semisynthetic, organic chemicals characterized by the presence of one or more aromatic rings with one or more hydroxyl substituents.

As detailed herein, the amount of polyphenols in the dry powder is reduced as compared to a powder obtained directly from pomace and hence the powder of the present disclosure has a less bitter taste. It was suggested that although the amount of polyphenol is reduced in the powder described herein, the amount may be still sufficient to provide beneficial effects, for example antioxidative effect or metabolic regulating effect.

The amount of polyphenol content is denoted as the total phenolic content (TPC). The TPC can be measured by any known method in the field such as laboratory methods. For example, TPC can be determined using the Folin-Ciocalteu method that uses the Folin-Ciocalteu reagent.

In some embodiments, the dry olive pomace powder comprises TPC that is reduced by a factor of at least about 2, at times at least about 3, at times at least about 4, at times at least about 5, at times at least about 6, at times at least about 7, at times at least about 8, at times at least about 9 and at times at least about 10 as compared to the TPC in an olive pomace.

In some embodiments, the dry olive pomace powder comprises between about 5% and about 40% of the TPC in an olive pomace. In some embodiments, the dry olive pomace powder comprises between about 10% and about 40% of the TPC in an olive pomace. In some embodiments, the dry olive pomace powder comprises between about 20% and about 40% of the TPC in an olive pomace. In some embodiments, the dry olive pomace powder comprises between about 25% and about 40% of the TPC in an olive pomace. In some embodiments, the dry olive pomace powder comprises between about 28% and 40% of the TPC in an olive pomace. In some embodiments, the dry olive pomace powder comprises between about 28% and 37% of the TPC in an olive pomace.

In some embodiments, the dry olive pomace powder comprises about 5%, at times about 7%, at times about 10%, at times about 15%, at times about 20%, at times about 25%, at times about 27%, at times about 28%, at times about 30%, at times about 33%, at times about 35%, at times about 37%, at times about 40% of the TPC in an olive pomace.

The TPC in the dry olive pomace powder is less than 0.9% (9mg/g), at times less than about 0.8%, at times less than about 0.7%, at times less than about 0.6%, at times less than about 0.5%, at times less than about 0.4% at times less than about 0.3%, or at times less than about 0.2%.

In some embodiments, the TPC in the dry olive pomace powder is between about 0.1% and less than0.9%, at times between about 0.2% and less than 0.9%, at times between about 0.2% and about 0.7%, at times between about 0.2% and about 0.6 %, at times between about 0.2% and about 0.5%, at times between about 0.2% and about 0.4%.

In some embodiments, the TPC in the dry olive pomace powder is between about 0.1%, 0.2%, 0.3%, 0.4%, 0.5% or 0.6% and less than 0.9%.

In some embodiments, the TPC in the dry olive pomace powder about 0.2%, at times about 0.25%, at times about 0.3%, at times about 0.35%, at times about 0.4%, at times about 0.45%, at times about 0.5%, at times about 0.55%, at times about 0.6%, at times about 0.65%, at times about 0.7%, at times about 0.75%, at times about 0.8%, at times about 0.85%, at times about 0.88%.

In some embodiments, the olive derived polyphenols comprise at least one of a phenolic acid, lignan, flavone, flavone glycoside, phenolic alcohol, glycoside or secoiridoid.

In accordance with some embodiments, the olive derived polyphenols comprise a phenolic acid.

In some embodiments, the olive derived polyphenols is or comprise vanillic acid, coumaric acid, caffeic acid, protocatechuic acid, p-hydroxybenzoic acid, ferulic acid, caffeoyl-quinic acid or any combination thereof.

In accordance with some embodiments, the olive derived polyphenols comprise a lignan.

In accordance with some embodiments, the olive derived polyphenols comprise acetoxypinoresinol, pinoresinol or any combination thereof.

In accordance with some embodiments, the olive derived polyphenols comprise a flavone.

In accordance with some embodiments, the olive derived polyphenols is apigenin, luteolin, rutin or any combination thereof.

In accordance with some embodiments, the olive derived polyphenols comprise a flavone glycoside.

In accordance with some embodiments, the olive derived polyphenols is or comprises luteolin-7-O-glucoside, apigenin-7-O-glucoside or any combination thereof.

In accordance with some embodiments, the olive derived polyphenols is a phenolic alcohol.

In accordance with some embodiments, the olive derived polyphenols is tyrosol, hydroxytyrosol or any combination thereof.

In accordance with some embodiments, the dry olive pomace powder comprises hydroxytyrosol. In some embodiments, hydroxytyrosol is present at an amount of between about 0.0005% and about 0.008%, at times between about 0.0005% and about 0.006%, at times between about 0.0005% and about 0.005%, and at times between abut 0.0005% to about 0.0020%.

In accordance with some embodiments, the dry olive pomace powder comprises tyrosol. In some embodiments, the tyrosol is present at an amount between about 0.0001% to about 0.009%, at times between about 0.0001% to about 0.005%, 0.0001% to about 0.003% and at times between 0.0002% to about 0.0008%.

In accordance with some embodiments, the olive derived polyphenols is a secoiridoid.

In accordance with some embodiments, the olive derived polyphenols is oleacein, oleocanthal, oleuropein, p-HPEA-EA or nay combination thereof.

In some embodiments, the olive derived polyphenols comprise oleuropein. In some embodiments, the olive derived polyphenols comprise hydrolytic breakdown products of oleuropein.

In some embodiments, the olive derived polyphenols comprise a glycoside. In some embodiments, the phenolic compound is verbascoside.

In some embodiments, the olive derived polyphenols is least one of vanillic acid, coumaric acid, caffeic acid, protocatechuic acid, p-hydroxybenzoic acid, ferulic acid, caffeoyl-quinic acid, acetoxypinoresinol, pinoresinol, apigenin, luteolin, rutin, luteolin-7-O-glucoside, apigenin-7-O-glucoside, tyrosol, hydroxytyrosol, oleacein, oleocanthal, oleuropein, *p*-HPEA-EA or verbascoside.

In accordance with some embodiments, the powder also comprises squalene. Squalene is a triterpene and is considered to have an antioxidant effect. In some embodiments, the powder comprises squalene at a concentration of between about 0.004% and about 0.055%, at times between about 0.005% and 0.02% at times between about 0.004% and about 0.017%.

In accordance with some embodiments, the powder also comprises squalene, hydroxytyrosol, tyrosol or combination thereof.

In accordance with some embodiments, the powder also comprises squalene, hydroxytyrosol, or combination thereof.

In some examples, the dry olive powder also comprises carbohydrate, yet, at relatively low concentrations. Such low concentrations of carbohydrate can be beneficial in improving glycemic response.

In some examples, the carbohydrate is or comprises at least one of glucose, fructose, mannitol and galactose.

In some embodiments, the olive pomace powder comprises at most about 17% carbohydrate, at times at most about 15%, at times at most about 12%, at times at most about 10%, at times at most about 8%, at times at most about 7%, at times at most about 5%, at times at most about 4%, at times at most about 3% by weight out of the total weight of the powder.

In some other examples, the olive pomace powder comprises between about 1% to about 17% carbohydrate, at times at times between about 1% to about 15%, at times between about 1% to about 12%, at times between about 1% to about 10%, at times between about 1% to about 8%, at times between about 1% to about 6%, at times between about 1% to about 5%, at times between about 1.5% to about 5%, at times between about 1.7 % to about 4%, at times between about 1.9 % to about 3.5%, at times between about 2% to about 3.5%, at times between 2% to about 3% by weight, at times between 2% to about 2.5% by weight.

In some embodiments, the olive pomace powder comprises carbohydrates between about 2% carbohydrate, at times about 2.1%, at times about 2.2%, at times about 2.3%, at times at least 2.5%, at times at least 2.6%, at times at least 2.7%, at times at least 2.8% carbohydrate.

In some examples, the dry olive pomace powder is characterized by olive dietary fibers to carbohydrates weight ratio of at least about 5, at times at least about 10, at times at least about 15, at times at least about 20, at times at least about 25, at times at least about 30, at times at least about 35, at times at least about 37, at times at least about 40, at times at least about 42.

In some embodiments, the dry olive pomace powder is characterized by olive dietary fibers to carbohydrates ratio of between 10 and 70, at times between 20 and 50, at times between 20 and 45, at times between 25 and 45, at times between 30 to 45, and at times between 35 to 45.

In accordance with some examples, the powder also comprises oil-derived fatty acid.

The oil content can be determined by any known method in the field. For example, by the Soxhlet extraction method.

The dry powder is characterized by a fat content of between 2% w/w to 10% w/w, at times between about 2% w/w to about 8% w/w, at times between about 3% w/w to about 8% w/w, at times between about 4% to about 8%w/w, at times between about 4.5% and about 6.5% out of the total weight of the dry food product.

In accordance with some examples, the powder comprises unsaturated fatty acids. In some examples, the unsaturated fatty acid is at least one of oleic acid, linoleic acid or linolenic acid.

In accordance with some examples, the powder comprises saturated fatty acids. In accordance with some embodiments, the saturated fatty acids comprise at least palmitic acid or stearic acid.

In some examples, the olive pomace powder also comprises olive proteins.

In some examples, the powder comprises at least about 1.5%, at least about 4%, at least about 6%, at least about 7%, at least about 8%, at least about 9% of olive proteins out of the total weight of the powder.

In some examples, the powder comprises olive protein between about 1.5% to about 30%, at times between about 1.5% to about 20%, at times between about 1.5% to about 10%, at times between about 1.5% to about 9% out of the total weight of the powder.

In some examples, the powder comprises olive protein between 1.5% to 30%, at times between 3% to 20%, at times between 3% to 20%, at times between 3% to 15%, at times between 3% to 12%, at times between 4% to 10%, at times between 5% to 10%, at times between 6% to 10%, at times between 6.5% to 10%, at times between 6.5% to 9%, at times between 7% to 9% out of the total weight of the powder.

In some examples, the powder comprises about 1.5%, about 2%, about 3%, about 4%, about 5%, about 6%, about 6.5%, about 7%, about 7.5%, about 8% of olive proteins out of the total weight of the powder.

In some examples, the proteins comprise polypeptides of 4.6 kDa and a thaumain-like protein.

In some embodiments, the olive pomace powder comprises between about 65% and about 95% w/w olive dietary fibers and less than 0.9% TCP out of the total weight of the powder, at time between about 0.1% and less than 0.9% TPC out of the total weight of the powder.

In some embodiments, the olive pomace powder comprises between about 75% and about 95% w/w olive dietary fibers and between about 0.1% and less than 0.9% TPC, at times between about 0.2% and less than 0.9% TPC, at times between about 0.3% and less than 0.9% TPC, at times between about 0.2% and about 0.7% TPC out of the total weight of the powder.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC and at most about 17% carbohydrate, at times between about 1% and about 5% carbohydrate, at times between about 1% and about 4% carbohydrate, at times between about 1.5% and about 3% out of the total weight of the powder.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC at times between about 2% to about 8% fat, at times between about 3% to about 8% fat, at times between about 4% to about 8% fat, at times between about 4.5% and about 6.5% fat out of the total weight of the dry food product.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC and between 1.5% to 30% olive proteins, at times between 3% to 20% olive proteins, at times between 4% to 20% olive proteins, at times between 4.5% to 12% olive proteins, at times between 5% to 10% olive proteins, at times between 5.5% to 10% olive proteins, at times between 6% to 10% olive proteins, at times between 6.5% to 10% olive proteins, at times between 6.5% to 9% olive proteins, at times between 7% to 9% olive proteins out of the total weight of the powder.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC, at most about 17% carbohydrate, at times between about 1% and about 5% carbohydrate, at times between about 1% and about 4% carbohydrate, at times between about 1.5% and about 3% and between about 1.5% to about 15% fat, at times between about 2% to about 10% fat, at times between about 2% to about 8% fat, at times between about 3% to about 8% fat, at times between about 4% to about 8% fat, at times between about 4.5% and about 6.5% fat out of the total weight of the dry food product.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC, at most about 17% carbohydrate, at times between about 1% and about 5% carbohydrate, at times between about 1% and about 4% carbohydrate, at times between about 1.5% and about 3% and between about 1.5% to about 15% fat, at times between about 2% to about 10% fat, at times between about 2% to about 8% fat, at times between about 3% to about 8% fat, at times between about 4% to about 8% fat, at times between about 4.5% and about 6.5% fat out of the total weight of the dry food product.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC, at most about 17% carbohydrate, at times between about 1% and about 5% carbohydrate, at times between about 1% and about 4% carbohydrate, at times between about 1.5% and about 3% carbohydrate and between 1.5% to 30% olive proteins, at times between 3% to 20% olive proteins, at times between 4% to 20% olive proteins, at times between 4.5% to 12% olive proteins, at times between 5% to 10% olive proteins, at times between 5.5% to 10% olive proteins, at times between 6% to 10% olive proteins, at times between 6.5% to 10% olive proteins, at times between 6.5% to 9% olive proteins, at times between 7% to 9% olive proteins out of the total weight of the powder.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC and between about 1.5% to about 15% fat, at times between about 2% to about 10% fat, at times between about 2% to about 8% fat, at times between about 3% to about 8% fat, at times between about 4% to about 8% fat, at times between about 4.5% and about 6.5% fat and between 1.5% to 30% olive proteins, at times between 3% to 20% olive proteins, at times between 4% to 20% olive proteins, at times between 4.5% to 12% olive proteins, at times between 5% to 10% olive proteins, at times between 5.5% to 10% olive proteins, at times between 6% to 10% olive proteins, at times between 6.5% to 10% olive proteins, at times between 6.5% to 9% olive proteins, at times between 7% to 9% olive proteins out of the total weight of the powder.

In some embodiments, the olive pomace powder comprises between about 65% and about 95% w/w olive dietary fibers, less than 0.9% TCP, at times between about 0.1% and less than 0.9% TPC, at times between about 0.3% and less than 0.9% TPC, at times between about 0.2% and about 0.7% TPC, at most about 17% carbohydrate, at times between about 1% and about 5% carbohydrate, at times between about 1% and about 4% carbohydrate, at times between about 1.5%, about 3% and between about 1.5% to about 15% fat, at times between about 2% to about 10% fat, at times between about 2% to about 8% fat, at times between about 3% to about 8% fat, at times between about 4% to about 8% fat, at times between about 4.5% and about 6.5% fat and between 1.5% to 30% olive proteins, at times between 3% to 20% olive proteins, at times between 4% to 20% olive proteins, at times between 4.5% to 12% olive proteins, at times between 5% to 10% olive proteins, at times between 5.5% to 10% olive proteins, at times between 6% to 10% olive proteins, at times between 6.5% to 10% olive proteins, at times between 6.5% to 9% olive proteins, at times between 7% to 9% olive proteins out of the total weight of the powder.

In some embodiments, the olive pomace powder as described herein comprises at most 0.5% sugar.

In some embodiments, the olive pomace powder as described herein has at most 340 calories.

In some embodiments, the olive pomace powder comprises between about 80% and about 90% olive dietary fibers, between about 0.1% and less than 0.9% TPC, between about 1.5% and about 2.5% carbohydrate, between about 5 % and about 7% fat and between about 6.5% and about 8.5% olive proteins.

In some embodiments, the olive pomace powder is as described in **Table 2.**

In some embodiments, the olive pomace powder comprises about 0.7% TPC (7mg/g), about 85% olive dietary fibers, about 2.1% carbohydrate, about 5.9% fat and about 7.3% olive proteins.

In some examples, the powder has an average size of 100µm.

In some embodiments, the particles have an average particles size of less than 500µm. In some embodiments, the particles have an average particles size of less than 200µm. In some embodiments, the particles have an average particles size of less than 100µm. In some embodiments, the particles have an average particles size of between about 5µm to about 200µm.

In some examples, the particles have an essentially uniform particle size, namely, a size difference/deviation from their average size of no more than 50µm, at times, no more than 25µm. at times, no more than 10µm in one dimension (i.e. it their length, width and/or thickness).

The particles dimensions can be determined by methods known in the art. For example, particles can be characterized by any one of optical microscope, laser particle size analyzer, Mastersizer 2000 or particle sizer sedimentation.

In some examples, the powder is characterized by its low water content. In some examples, the powder has a water content of less than 10%v/w. In some examples, the powder has water content of between about 2% to about 10%, at times between about 2% to about 9%, at times between about 5% to about 8%.

In some examples, the powder is substantially water free, i.e. has no detectable water content as determined by methods known in the art. Maintaining low humidity is of particular importance in the food industry, where its absence is required in order to prevent the development of microbial or fungal contaminations.

In some examples, the powder is stable. Stability in the context of the present disclosure refers to at least one of microbial stability, oxidative stability and taste stability and is determined at different time points following storage of the olive pomace powder under storage conditions. The storage conditions may include any combination of the following different temperatures, such as room temperature or at increased temperatures such as at least 30°C, at least 50°C, at least 60°C, at least 70°C or at least 80°C and the following different humidity values, for example, at least 40%, at least 50%, at least 60%, at least 70%, at least 80% or at least 90%.

In some embodiments, the powder described herein is storage stable for at least 1 month when stored at room temperature, at times for at least 2 months, at times for at least 3 months, at times for at least 4 months, at times for at least 5 months, at times for at least 6 months, at times for at least 8 months, at times for at least 12 months.

The olive pomace used to produce the dry olive pomace powder can be one obtained during olive oil production, e.g. subsequent to a two-phase decanter processing or a three-phase decanter processing.

For the preparation of the olive pomace powder, starting material (i.e. olive pomace) from any source can be used. As described herein, the olive pomace can be either *orujo* (olive pomace from three phase decanter) or *alperujo* (olive pomace from two phase decanter). As also described herein, *alperujo* include more water than *orujo.*

In accordance with some examples, the pomace is a fresh pomace obtained from the decanter in which the olive oil is extracted. As described herein, the olive pomace is obtained as a by-product of olive oil extraction. In some examples, the olive pomace is collected when being at a temperature of 23°C-50°C. In some examples, the olive pomace is collected when being at a temperature of 25°C-40°C. In some examples, the olive pomace is collected when being at a temperature of 30°C-45°C. In some examples, the olive pomace by product is collected when being at a temperature of about 35°C.

In some embodiments, the pomace is a frozen pomace that is thawed prior to further processing in accordance with the present disclosure.

Regardless of the source of pomace used (i.e. fresh or thawed), the olive pomace is collected before oxidation and fermentation begins.

In some examples, the at least one separation step in which a suspension of olive pomace in an aqueous liquid is subjected to at least one separation step, is performed in a decanter. In some embodiments, the decanter spins at a velocity of at least about 2800 rpm, at least about 3000 rpm or at least about 3500 rpm. In some embodiments, the decanter spins at a velocity of about 2800 rpm, about 3000 rpm or about 3500 rpm. It should be noted that the decanter comprises a screw conveyor operated at an increased velocity of about 18-30 rpm.

In some examples, the separation step is performed in a two-phase decanter.

In some examples, the separation step is performed in a three-phase decanter.

As noted above, the olive pomace, either *alperujo* or *orujo,* has a water content of at least 50% and is subjected as an aqueous suspension to the at least one separation step. The separation step was found to remove at least a portion of the liquid. The portion of the liquid being removed from the dry matter by the separation step refers at least 15%, at times at least 25%, at times at least 35%, at times at least 45%, at times at least 55%, at times between 40% to 55% of the liquid present in the olive pomace. The dry matter as used herein refers to the material remaining after removal of water in the olive pomace.

It was found by the inventors that subjecting the aqueous liquid suspension of the olive pomace to a separation step using a centrifugation system and specifically a horizontal differential centrifuge such as a decanter, results in an olive pomace cake having reduced TPC and high nutritional components such as olive fibers.

The method comprises at least one washing step prior to at least one separation step. The washing step is done by mixing olive pomace with an aqueous solution. Mixing the olive pomace with an aqueous solution is denoted herein as a *washing step.*

The washing conditions for mixing olive pomace with an aqueous solution to obtain aqueous suspension of olive pomace, namely the aqueous solution volume, washing temperature and washing time may be determined such that to facilitate removal of the phenolic compounds to the aqueous liquid and hence reducing TPC while maintaining high content of dietary fibers.

The at least one washing step is done with an aqueous solution. In some embodiments, the at least one washing step is done with water or saline.

In some examples, the olive pomace (fresh or thawed), is mixed with an aqueous solution such as water or saline water.

The amount of aqueous solution to be added to the pomace during the washing stage depends, *inter alia,* on the pomace density and/or the pomace original water content (e.g. as obtained from the olive oil extraction process) (e.g. *alperujo* or *orujo).*

In some examples, the amount of aqueous liquid added to the pomace during the washing step, is such to provide a w/v ratio between the olive pomace to the aqueous solution of between about 1:1 and about 1:5, at times between about 1:1 and about 1:4, at times between about 1:1 and about 1:3, at times between about 1:1 and about 1:2 and at times between about 1:2 and about 1:3. In some examples, the ratio between the olive pomace to the aqueous solution is about 1:2. In some examples, the ratio between the olive pomace to the aqueous solution is about 1:1.5.

In some embodiments, the at least one washing step is at a temperature of less than about 100°C, at times less than about 80°C, at times less than 70°C, at times less than 60°C and at times less than 50°C.

In some embodiments, the at least one washing step is at a temperature of between about 10°C to about 70°C, at times between about 20°C to about 65°C and at times between about 20°C to about 40°C.

In some embodiments, the at least one washing step is for a time period of between about 10 minutes and about 3 hours, at times between about 20 minutes and about 2 hours and at times between about 30 minutes and about 1 hour. In some embodiments, the at least one washing step is for a time period of about an hour.

Described, but not part of the present invention, is a method for preparing a food ingredient comprising dry olive pomace powder, the method comprises:
(i) mixing olive pomace with an aqueous solution at least once to obtain aqueous suspension of olive pomace,
(ii) subjecting the aqueous suspension of olive pomace to at least one separation step in which at least a portion of said aqueous solution is removed from dry matter to obtain an olive pomace cake;
(iii) drying the olive pomace cake to obtain a dried olive pomace; and
(iv) subjecting the dried olive pomace to at least one milling step to obtain a dry olive pomace powder.

It is of note that the aqueous suspension of olive pomace encompasses *alperujo* or *orujo,* with a water content of at least 50% and can be obtained, for example, after at least one washing step.

In some examples, in which the methods comprise a washing step, the method comprises at least one cycle of a washing step followed by a separation step.

The number of washing step-separation step cycles may vary, and at times may be dictated by the TPC in the pomace prior to washing and/or the amount of TPC required in the end product, i.e. the powder.

In some embodiments, the method comprises a single separation step. In some examples, in which the methods comprise a washing step, the method comprises a single cycle of a washing step prior to the single sequential separation step.

In some embodiments, the methods comprise a single cycle of (i) mixing olive pomace with an aqueous solution to obtain washed olive pomace and (ii) subjecting the washed olive pomace to a separation step in which at least a portion of said aqueous solution is removed from dry matter to obtain an olive pomace cake.

In some embodiments in which the methods comprise a washing step, the methods comprise steps (i) and (ii) once before step (iii).

In some embodiments, the method comprises more than one cycle of a washing step and a sequential separation step.

In some examples, in which the methods comprise a washing step, the method comprises repeated (multiple) cycles of a washing step and a sequential separation step. In some embodiments, the methods comprise at least two cycles (i.e. washing step, separation step, washing step, separation step), at least three, at least four, at least five, at least six, or at times at least seven cycles.

In some embodiments in which the methods comprise a washing step, the methods comprise repeating a combination of step (i) followed by (ii) at least twice, at least three times, at least four times, at least five times, at least six times before step (iii).

In some embodiments, the methods comprise two cycles, at times three cycles, at times four cycles, at times five cycles, at times six cycles, at times seven cycles of (i) mixing olive pomace with an aqueous solution to obtain washed olive pomace and (ii) subjecting the washed olive pomace to a separation step in which at least a portion of said aqueous solution is removed from dry matter to obtain an olive pomace cake.

In some examples in which the method comprises repeated cycles of a washing step followed by a separation step, the method comprises mixing olive pomace *(alperujo* or *orujo)* or olive cake with an aqueous solution. As appreciated, the first washing step comprising mixing olive pomace with an aqueous solution, whereas subsequent washing steps (if present) comprising mixing olive pomace cake with an aqueous solution.

In some embodiments, after the at least one separation step and at times at least one washing and separation cycle, the TPC is about 5%, at times about 7%, at times about 10%, at times about 15%, at times about 20%, at times about 25%, at times about 27%, at times about 28%, at times about 30%, at times about 33%, at times about 35%, at times about 37%, at times about 40% of the TPC in an olive pomace.

As can be seen in **Fig. 1** **and Table 1,** the amount of TPC after the first washing and separation cycle was significantly reduced as compared to the TPC in an olive pomace. Specifically, after a single cycle of a washing step and a separation step, the TPC was reduced by at least 60% and at times about 60% to 80%. Further and as can be seem from **Fig. 1** and **Table 1,** multiple cycles, each cycle comprising a washing step followed by a separation step, further reduced the amount of TPC, but to somewhat lesser extent.

It was suggested by the inventors that effective removal of polyphenols can be obtained even by a single washing step followed by a single separation step.

In some embodiments, the at least one washing step is done with an alkaline solution.

In some embodiments, in which at least one washing step is conducted with an alkaline solution, the method comprises after this washing step at least one separation step and at least one washing step with an acid solution so as to neutralize the alkalinity of the separated solid mass.

In some examples, the alkaline solution comprises sodium hydroxide. In some examples, the alkaline solution comprises a concentration of sodium hydroxide between about 0.2% to about 3%, at times between about 0.5% to about 2.5%, at times between about 1% to about 2%. In some examples, the alkaline solution comprises a concentration of sodium hydroxide of about 0.5%.

In accordance with some examples, the acid solution is hydrogen chloride. In some examples, the acid solution comprises a concentration of hydrogen chloride between about 0.05% to about 0.5%, at times between about 0.1% to about 0.3. In some examples, the acid solution comprises a concentration of hydrogen chloride of about 0.1%.

As shown in **Table 3,** the amount of TPC was somewhat similar in methods which include several washing steps with only water and in methods that include a combination of washing steps with water, washing step with base and a washing step with acid. This suggests that using only water in the washing steps is highly effective in reducing the amount of TPC.

In some examples, prior to applying the at least one separation step or the at least one washing step, the olive pomace is sifted to remove undesirable residual material (e.g. olive pit fragments). The sifting can be performed using a sifter suitable for collecting the 'uncontaminated' pomace.

After the at least one separation step, the olive pomace cake exits the decanter (two-phase decanter three-phase decanter) at a temperature of between about 20°C and about 35°C, at times between about 20°C and about 30°C, at times between about 25°C and about 30°C.

The olive pomace cake is then dried. Drying can be achieved by controlled heating of the cake. Heating can be done by techniques known in the art. In some examples, heating is conducted using an oven, optionally with forced ventilation. The heating may comprise several heating steps, optionally sequential steps.

In some embodiments, drying is performed in an oven.

In some examples, the drying is under controlled conditions, namely drying temperature and drying time that provide a cake having a water content of less than 10%.

In some embodiments, drying is terminated when the water content is considered suitable for further processing. In some embodiments, the moisture content following drying is between about 2% to about 10%, at times between about 1% to about 9%, further at times between about 2% to about 9%. In some embodiments, the moisture content after roasting is between about 5% to about 8%.

The dried olive pomace cake is subjected to at least one size reduction step by processes and machines conventional in the food industry.

The size reduction, e.g. milling/grinding, irrespective of the particular procedure employed, brings the olive pulp cake into a particle size of less than 500µm, at times less than 200µm, at times less than 100µm, at times between about 5µm to about 200µm, and at time between about 1µm to about 200µm.

In some examples, the powdered product is collected and may be sifted using a sifter having a desired mesh opening.

In some examples, the method disclosed herein does not comprise an addition of an enzyme and is enzymatically free.

As described herein, the olive powder comprises a reduced amount of polyphenols. It was suggested that this reduction results in a less bitter taste which is typically attributed to polyphenols. The taste of the powder can be evaluated by a panel of tasters trained to recognize changes in the taste of the powder of the present disclosure in reference to the taste of a powder obtained, for example, from olive pomace directly.

The dry olive pomace powder disclosed herein can be used as a food ingredient, e.g. as an edible flour. This nutritional edible flour can then be used in the production of a variety of food products, such as cakes, cookies, muffins, bread, pie crusts, pancakes, biscuits, pizza dough, and pasta.

In some examples, the food ingredient comprises, in addition to the dry olive pomace powder other food components, such as flour from other sources, e.g. wheat flour, whole-wheat flour, almond flour etc.

The term "about" as used herein indicates values that may deviate up to 1%, more specifically 5%, more specifically 10%, more specifically 15%, and in some cases up to 20% higher or lower than the value referred to, the deviation range including integer values, and, if applicable, non-integer values as well, constituting a continuous range. Thus, as used herein the term "about" refers to ± 10 %.

The terms "comprises", "comprising", "includes", "including", "having" and their conjugates mean "including but not limited to".

It should be noted that various embodiments of this invention may be presented in a range format. The description of a range should be considered to have specifically disclosed all the possible sub ranges as well as individual numerical values within that range. For example, description of a range such as from 1 to 6 or between 1 and 6 should be considered to have specifically disclosed sub ranges such as from 1 to 3, from 1 to 4, from 1 to 5, from 2 to 4, from 2 to 6, from 3 to 6 etc., as well as individual numbers within that range, for example, 1, 2, 3, 4, 5, and 6.

Disclosed and described, it is to be understood that this invention is not limited to the particular examples, methods steps, and powders disclosed herein as such methods steps and compositions may vary somewhat. It is also to be understood that the terminology used herein is used for the purpose of describing particular embodiments only and not intended to be limiting since the scope of the present invention will be limited only by the appended claims and equivalents thereof.

It must be noted that, as used in this specification and the appended claims, the singular forms "a", "an" and "the" include plural referents unless the content clearly dictates otherwise.

It should be noted that the various embodiments and examples detailed herein in connection with various aspects of the invention may be applicable to one or more aspects disclosed herein. It should be further noted that any embodiment described herein, for example, related to components of the dry powder, may be applied separately or in various combinations. Various embodiments and aspects of the present invention as delineated hereinabove and as claimed in the claims section below find experimental support in the following examples.

### DETAILED DESCRIPTION ON SOME NON-LIMITING EXAMPLES

### Example 1: Preparation of olive pomace powder

This example evaluated the effect of repeated cycles of washing-separating with water. Olive pomace was mixed with water for an hour.

A mixture of fresh olive pomace and water was introduced into a decanter centrifuge operated at a velocity of 3000 rpm.

An olive cake that was collected after the decanter was further washed with water for 30 minutes and was further introduced into a decanter centrifuge operated at a velocity of 3000 rpm for number of times as detailed below. Each one of steps 2-7 refer to a cycle of washing and separating.

**Table 1** provides the experimental conditions and the amount of polyphenol after each step.

The results are also shown in **Fig. 1****.**

As can be seen in **Table 1 and** **Fig. 1****,** a significant reduction of about 66% was observed in the amount of TPC after the one washing and separation cycle (step 2). In other words, after one cycle of washing with water and separating with a decanter, 33% of the fresh pomace TPC were maintained and hence 66% TPC was removed.

Multiple washing and separation cycles resulted a further, yet somewhat less significant reduction of TPC.

The results suggest that a single washing-separation cycle results in significant reduction in TPC.

**Table 1: Experimental procedure and the amount of Polyphenol after each washing and separation cycle.**

| **Step** | **Washings with water solution** | **Amount of Polyphenol (mg/g)** |
|---|---|---|
| 1 | fresh pomace | 23.4 |
| 2 | Washing with water at a ratio of 1:1.5 olive pomace to water solution (v/w) and separation in a decanter | 7.80 (0.78%) |
| 3 | Washing with water at a ratio of 1:1.5 olive pomace to water solution (v/w) and separation in a decanter | 4.30 |
| 4 | Washing with water at a ratio of 1:1.5 olive pomace to water solution (v/w) and separation in a decanter | 5.03 |
| 5 | Washing with water at a ratio of 1:1.5 olive pomace to water solution (v/w) and separation in a decanter | 5.47 |
| 6 | Washing with water at a ratio of 1:1.5 olive pomace to water solution (v/w) and separation in a decanter | 3.53 |
| 7 | Washing with water at a ratio of 1:1.5 olive pomace to water solution (v/w) and separation in a decanter | 2.40 |

The powder obtained after a step 2 (i.e. a single cycle of washing and separating) was further characterized by about 85% olive dietary fibers, about 2.1% carbohydrate, about 5.9% fat and about 7.3% olive proteins.

### Example 2: Preparation of olive pomace powder

Thawed olive pulp was introduced into a phase decanter centrifuge operated at a velocity of 3000 rpm. The cake was separated, and the cake (70 kg) was washed with 140 liter water at a temperature of 60°C for 30 minutes. Then the aqueous suspension was introduced into a decanter centrifuge operated at a velocity of 3000 rpm. The olive pulp cake was dried at a temperature of 60-80°C and the dried mixture undergo milling to obtain a powder having particle size of less than 200micron. At the end of the process the amount of polyphenols was 2.7mg/g.

### Example 3: Preparation of olive pomace powder

Thawed olive pulp (100 kg) comprising 21.3mg/g polyphenols was washed with 200 liter water at a temperature of 37°C for 1 hour. Then the aqueous suspension was introduced into a decanter centrifuge operated at a velocity of 3000 rpm. The olive pulp cake was dried at a temperature of 60-80°C and the dried mixture undergo milling to obtain a powder having particle size of less than 200micron.

**Table 2** below provides powder characteristics.

**Table 2: Olive pomace powder characteristics**

| **Component** | **w/w%** |
|---|---|
| fibers | 80-85% |
| polyphenols | 5.9mg/g |
| carbohydrate | 1.5-4% |
| fat | 2-7.5% |
| protein | 4-8% |

### Example 4: Preparation of olive pomace powder

This example evaluated the effect of repeated cycles of washing-separating with water combined with base/acid. Olive pomace was mixed with water for an hour. A mixture of fresh olive pomace and water was introduced into a decanter centrifuge operated at a velocity of 3000 rpm.

The olive cake that was collected after the decanter was further washed with water for 30 minutes and was further introduced into a decanter centrifuge operated at a velocity of 3000 rpm as detailed below.

**Table 3** provides the experimental conditions and the amount of polyphenol after each step.

**Table 3: Experimental procedure and amount of Polyphenol**

| **Step** | **Combined wishing with water solution and acid/base** | **Amount of Polyphenol (mg/g)** |
|---|---|---|
| 1 | fresh pomace | 23.3 |
| 2 | Washing with water at a ratio of 1:1.5 olive pomace to water solution (v/w) and separation in a decanter | 6.97 |
| 3 | Washing with water at a ratio of 1:1.5 olive pomace to water solution (v/w) and separation in a decanter | 3.90 |
| 4 | Washing with water solution at a ratio of 1:1.5 olive pomace to water solution (v/w), the water solution comprising 48% sodium hydroxide and separation in a decanter | 2.97 |
| 5 | Washing with water at a ratio of 1:1.5 olive pomace to water solution (v/w) and separation in a decanter | 2.17 |
| 6 | Washing with water at a ratio of 1:1.5 olive pomace to water solution (v/w), the water solution comprising 32% HCl and separation in a decanter | 1.47 |
| 7 | Washing with water at a ratio of 1:1.5 olive pomace to water solution (v/w) and separation in a decanter | 1.47 |

As shown in **Table 3,** including washing steps with a base/acid solution has a minor effect on the amount of polyphenols as compared to washings with only water.

## Claims

1. A food ingredient consisting of a dry olive pomace powder containing olive pomace dietary fibers, olive pomace polyphenols and fat, wherein said dry olive pomace powder has a total phenolic content (TPC) of less than 0.9% (w/w), olive dietary fibers content of at least 65% by weight out of the total weight of the powder and between 2% to 10% fat w/w.

2. The food ingredient of claim 1, wherein the olive dietary fibers content is between 65% and about 95%, optionally wherein the olive dietary fibers content is between about 75% and about 95%.

3. The food ingredient of claim 1 or 2, wherein the TPC is less than about 0.8%w/w.

4. The food ingredient of any one of claims 1 to 3, wherein the olive dietary fibers comprise at least olive derived pectin polysaccharide, or at least one of olive derived celluloses, hemicellulose or lignin.

5. The food ingredient of any one of claims 1 to 4, wherein the olive pomace polyphenols comprise (i) at least one of compound selected from the group consisting of phenolic acid, lignan, flavone, flavone glycoside, phenolic alcohol and secoiridoid, or (ii) at least one of squalene, hydroxytyrosol or combination thereof.

6. The food ingredient of any one of claims 1 to 5, having a water content of less than 10%.

7. The food ingredient of any one of claims 1 to 6, comprising olive pomace proteins, optionally comprising between 1.5% and 9% olive proteins out of the total weight of said dry powder.

8. The food ingredient of any one of claims 1 to 7, wherein said dry powder has an average particle size of less than 500µm, optionally having an average particles size of between about 1µm and about 200 µm.

9. A method for preparing a food ingredient consisting of dry olive pomace powder of any one of claims 1-8, the method consisting of:
(i) washing the olive pomace by mixing the olive pomace with an aqueous liquid at least once to obtain aqueous suspension of olive pomace;
(ii) subjecting the aqueous suspension of olive pomace to at least one separation step in which at least a portion of said water is removed from dry matter to obtain an olive pomace cake;
(iii) drying the olive pomace cake to obtain a dried olive pomace;
(iv) subjecting the dried olive pomace to at least one milling step to obtain a dry olive pomace powder; and
(v) optionally, collecting and sifting the dry olive pomace powder using a sifter having a desired mesh opening.

10. The method of claim 9, wherein the at least one separation step is performed in a horizontal differential centrifuge, optionally wherein the horizontal differential centrifuge is operated at a velocity of about 3000 rpm, optionally wherein said at least one separation step is performed in a decanter.

11. The method of claim 9 or claim 10, wherein said washing is at an olive pomace to water w/v ratio of between 1:1 to 1:5, optionally wherein the at least one washing step is at a washing solution temperature of less than 100°C.

12. The method of any one of claims 9 to 11, wherein the drying is at a temperature of up to 110°C and until the dry olive pomace powder has a water content of less than 10%.

13. The method of any one of claims 9 to 12, wherein the method comprises at least two cycles of (i) mixing olive pomace with an aqueous liquid to obtain washed olive pomace and (ii) subjecting the washed olive pomace to a separation step in which at least a portion of said aqueous liquid is removed from dry matter to obtain an olive pomace cake, optionally wherein the method comprises at least three, at least four, at least five, at least six or at least seven cycles of a washing step and a sequential separation step.

## Patentansprüche

1. Lebensmittelzutat, bestehend aus einem Oliventrester-Trockenpulver, das Oliventrester-Ballaststoffe, Oliventrester-Polyphenole und Fett enthält, wobei das Oliventrester-Trockenpulver einen Gesamtphenolgehalt (TPC) von weniger als 0,9 % (w/w), einen Gehalt an Oliven-Ballaststoffen von mindestens 65 Gew.- % des Gesamtgewichts des Pulvers und zwischen 2 % bis 10 % (w/w) Fett aufweist.

2. Lebensmittelzutat nach Anspruch 1, wobei der Gehalt an Oliven-Ballaststoffen zwischen 65 % und etwa 95 % beträgt, wobei optional der Gehalt an Oliven-Ballaststoffen zwischen etwa 75 % und etwa 95 % beträgt.

3. Lebensmittelzutat nach Anspruch 1 oder 2, wobei der TPC weniger als etwa 0,8 % (w/w) beträgt.

4. Lebensmittelzutat nach einem der Ansprüche 1 bis 3, wobei die Oliven-Ballaststoffe mindestens ein von Oliven abgeleitetes Pektinpolysaccharid oder mindestens eines von Cellulosen, Hemicellulose oder Lignin umfassen, die/das von Oliven abgeleitet sind/ist.

5. Lebensmittelzutat nach einem der Ansprüche 1 bis 4, wobei die Oliventrester-Polyphenole Folgendes umfassen: (i) mindestens eine Verbindung ausgewählt aus der Gruppe bestehend aus Phenolsäure, Lignan, Flavon, Flavonglycosid, phenolischem Alkohol und Secoiridoid oder
(ii) mindestens eines aus Squalen, Hydroxytyrosol oder einer Kombination davon.

6. Lebensmittelzutat nach einem der Ansprüche 1 bis 5 mit einem Wassergehalt von weniger als 10 %.

7. Lebensmittelzutat nach einem der Ansprüche 1 bis 6, umfassend Oliventrester-Proteine, optional umfassend zwischen 1,5 % und 9 % Olivenproteine aus dem Gesamtgewicht des Trockenpulvers.

8. Lebensmittelzutat nach einem der Ansprüche 1 bis 7, wobei das Trockenpulver eine durchschnittliche Partikelgröße von weniger als 500 µm aufweist, optional eine durchschnittliche Partikelgröße zwischen etwa 1 µm und etwa 200 µm aufweist.

9. Prozess zum Herstellen einer Lebensmittelzutat, die aus Oliventrester-Trockenpulver nach einem der Ansprüche 1-8 besteht, wobei der Prozess aus Folgendem besteht:
(i) Waschen des Oliventresters durch mindestens einmaliges Mischen des Oliventresters mit einer wässrigen Flüssigkeit, um eine wässrige Suspension des Oliventresters zu erhalten;
(ii) Unterziehen der wässrigen Suspension von Oliventrester mindestens einem Trennungsschritt, in dem mindestens ein Teil des Wassers aus der Trockensubstanz entfernt wird, um einen Oliventrester-Kuchen zu erhalten;
(iii) Trocknen des Oliventrester-Kuchens, um einen getrockneten Oliventrester zu erhalten;
(iv) Unterziehen des getrockneten Oliventresters mindestens einem Mahlschritt, um ein Oliventrester-Trockenpulver zu erhalten; und
(v) optional Sammeln und Sieben des Oliventrester-Trockenpulvers unter Verwendung eines Siebs mit einer gewünschten Maschenöffnung.

10. Prozess nach Anspruch 9, wobei der mindestens eine Trennungsschritt in einer horizontalen Differentialzentrifuge durchgeführt wird, wobei die horizontale Differentialzentrifuge optional mit einer Geschwindigkeit von etwa 3000 U/min betrieben wird, wobei der mindestens eine Trennungsschritt optional in einem Dekanter durchgeführt wird.

11. Prozess nach Anspruch 9 oder Anspruch 10, wobei das Waschen in einem Gew./Vol.-Verhältnis von Oliventrester zu Wasser zwischen 1:1 bis 1:5 erfolgt, wobei der mindestens eine Waschschritt optional bei einer Waschlösungstemperatur von weniger als 100 °C erfolgt.

12. Prozess nach einem der Ansprüche 9 bis 11, wobei das Trocknen bei einer Temperatur von bis zu 110 °C erfolgt und bis das Oliventrester-Trockenpulver einen Wassergehalt von weniger als 10 % aufweist.

13. Prozess nach einem der Ansprüche 9 bis 12, wobei der Prozess mindestens zwei Zyklen umfasst: (i) Mischen von Oliventrester mit einer wässrigen Flüssigkeit, um gewaschenen Oliventrester zu erhalten, und (ii) Unterziehen des gewaschenen Oliventresters gegenüber einem Trennungsschritt, in dem mindestens ein Teil der wässrigen Flüssigkeit aus der Trockenmasse entfernt wird, um einen Oliventrester-Kuchen zu erhalten, wobei der Prozess optional mindestens drei, mindestens vier, mindestens fünf, mindestens sechs oder mindestens sieben Zyklen eines Waschschritts und eines sequentiellen Trennungsschritts umfasst.

## Revendications

1. Ingrédient de nourriture constitué d'une poudre sèche de marc d'olive contenant des fibres alimentaires de marc d'olive, des polyphénols de marc d'olive et de la graisse, dans lequel ladite poudre sèche de marc d'olive présente une teneur phénolique totale (TPC) inférieure à 0,9 % (p/p), une teneur en fibres alimentaires d'olive d'au moins 65 % en poids sur le poids total de la poudre et entre 2 % et 10 % en poids de graisse.

2. Ingrédient de nourriture de la revendication 1, dans lequel la teneur en fibres alimentaires d'olive est comprise entre 65 % et environ 95 %, éventuellement dans lequel la teneur en fibres alimentaires d'olive est comprise entre environ 75 % et environ 95 %.

3. Ingrédient de nourriture de la revendication 1 ou 2, dans lequel la TPC est inférieure à environ 0,8 %p/p.

4. Ingrédient de nourriture de l'une quelconque des revendications 1 à 3, dans lequel les fibres alimentaires d'olive comprennent au moins un polysaccharide de pectine dérivé d'olive, ou au moins l'un parmi des celluloses, de l'hémicellulose ou de la lignine dérivées d'olive.

5. Ingrédient de nourriture de l'une quelconque des revendications 1 à 4, dans lequel les polyphénols de marc d'olive comprennent (i) au moins un composé choisi dans le groupe constitué par l'acide phénolique, le lignane, la flavone, le glycoside de flavone, l'alcool phénolique et le sécoiridoïde, ou (ii) au moins un composé choisi parmi le squalène, l'hydroxytyrosol ou une combinaison de ceux-ci.

6. Ingrédient de nourriture de l'une quelconque des revendications 1 à 5, présentant une teneur en eau inférieure à 10 %.

7. Ingrédient de nourriture de l'une quelconque des revendications 1 à 6, comprenant des protéines de marc d'olive, comprenant éventuellement entre 1,5 % et 9 % de protéines d'olive sur le poids total de ladite poudre sèche.

8. Ingrédient de nourriture de l'une quelconque des revendications 1 à 7, dans lequel ladite poudre sèche présente une taille de particule moyenne inférieure à 500 µm, présentant éventuellement une taille de particule moyenne comprise entre environ 1 µm et environ 200 µm.

9. Procédé de préparation d'un ingrédient de nourriture constitué de poudre sèche de marc d'olive de l'une quelconque des revendications 1 à 8, le procédé comprenant :
(i) la dilution du marc d'olive en mélangeant le marc d'olive avec un liquide aqueux au moins une fois pour obtenir une suspension aqueuse de marc d'olive ;
(ii) la soumission de la suspension aqueuse de marc d'olive à au moins une étape de séparation où au moins une partie de ladite eau est éliminée de la matière sèche pour obtenir un galet de marc d'olive ;
(iii) le séchage du galet de marc d'olive pour obtenir un galet de marc d'olive séché ;
(iv) la soumission du marc d'olive séché à au moins une étape de broyage pour obtenir une poudre sèche de marc d'olive ; et
(v) éventuellement, la collecte et le tamisage de la poudre sèche de marc d'olive à l'aide d'un tamis présentant une ouverture de maille souhaitée.

10. Procédé de la revendication 9, dans lequel l'au moins une étape de séparation est réalisée dans une centrifugeuse différentielle horizontale, éventuellement dans lequel la centrifugeuse différentielle horizontale fonctionne à une vitesse d'environ 3 000 tr/min, éventuellement dans lequel ladite au moins une étape de séparation est réalisée dans un décanteur.

11. Procédé de la revendication 9 ou de la revendication 10, dans lequel ladite dilution est effectuée à un rapport p/v du marc d'olive à l'eau compris entre 1:1 et 1:5, éventuellement dans lequel l'au moins une étape de dilution est effectuée à une température de solution de dilution inférieure à 100 °C.

12. Procédé de l'une quelconque des revendications 9 à 11, dans lequel le séchage est effectué à une température allant jusqu'à 110 °C et jusqu'à ce que la poudre sèche de marc d'olive présente une teneur en eau inférieure à 10 %.

13. Procédé de l'une quelconque des revendications 9 à 12, dans lequel le procédé comprend au moins deux cycles de (i) mélange de marc d'olive avec un liquide aqueux pour obtenir un marc d'olive dilué et de (ii) soumission du marc d'olive dilué à une étape de séparation où au moins une partie dudit liquide aqueux est éliminée de la matière sèche pour obtenir un galet de marc d'olive, éventuellement dans lequel le procédé comprend au moins trois, au moins quatre, au moins cinq, au moins six ou au moins sept cycles d'une étape de dilution et d'une étape de séparation séquentielle.
